(19) Europäisches Patentamt
European Patent Office
Office européen des brevets

(11) **EP 2 694 599 B1**

(12) **EUROPÄISCHE PATENTSCHRIFT**

(45) Veröffentlichungstag und Bekanntmachung des Hinweises auf die Patenterteilung:
**17.05.2017   Patentblatt 2017/20**

(21) Anmeldenummer: **12712223.2**

(22) Anmeldetag: **21.03.2012**

(51) Int Cl.:
*C09C 1/36* (2006.01)          *D21H 17/67* (2006.01)
*D21H 17/69* (2006.01)        *D21H 21/28* (2006.01)
*D21H 27/26* (2006.01)

(86) Internationale Anmeldenummer:
**PCT/EP2012/001229**

(87) Internationale Veröffentlichungsnummer:
**WO 2012/130408 (04.10.2012 Gazette 2012/40)**

(54) **VERFAHREN ZUR OBERFLÄCHENBEHANDLUNG EINES TITANDIOXID-PIGMENTS**

METHOD FOR SURFACE TREATMENT OF A TITANIUM DIOXIDE PIGMENT

PROCÉDÉ DE TRAITEMENT DE SURFACE D'UN PIGMENT DE DIOXYDE DE TITANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.04.2011   DE 102011015856**

(43) Veröffentlichungstag der Anmeldung:
**12.02.2014   Patentblatt 2014/07**

(73) Patentinhaber: **Kronos International, Inc.
51373 Leverkusen (DE)**

(72) Erfinder:
• **SIEKMAN, Janine
  51465 Bergisch Gladbach (DE)**
• **JUERGENS, Volker
  57399 Kirchhundem (DE)**
• **BLUEMEL, Siegfried
  40883 Ratingen (DE)**
• **BREYDER, Alexander
  51379 Leverkusen (DE)**
• **SCHMITT, Volker
  42799 Leichlingen (DE)**

(56) Entgegenhaltungen:
EP-A2- 0 753 546          WO-A2-2004/061013
DE-A1- 10 332 650        US-A1- 2007 068 423
US-A1- 2007 175 363

**Beschreibung**

Gebiet der Erfindung

Die Erfindung betrifft ein Verfahren zur Oberflächenbehandlung eines Titandioxid-Pigments, ein Titandioxid-Pigment mit hoher Lichtechtheit (Vergrauungsstabilität) und seine Verwendung bei der Herstellung von Dekorpapier.

Technologischer Hintergrund der Erfindung

Dekorpapier ist ein Bestandteil eines dekorativen, duroplastischen Beschichtungswerkstoffes, der vorzugsweise zur Veredelung von Möbeloberflächen und für Laminat-Fußböden eingesetzt wird. Als Laminate werden Schichtpress-Stoffe bezeichnet, in denen beispielsweise mehrere imprägnierte, aufeinander geschichtete Papiere bzw. Papiere und Hartfaser- oder Holzspanplatten miteinander verpresst sind. Durch die Verwendung von speziellen Kunstharzen wird eine außerordentlich hohe Kratz-, Stoß-, Chemikalien- und Hitzebeständigkeit der Laminate erreicht.

Die Verwendung von Spezialpapieren (Dekorpapieren) ermöglicht die Herstellung dekorativer Oberflächen, wobei das Dekorpapier nicht nur als Deckpapier für z.B. unattraktive Holzwerkstoffoberflächen, sondern auch als Träger für das Kunstharz dient. Zu den Anforderungen, die an ein Dekorpapier gestellt werden, gehören u.a. Opazität (Deckvermögen), Lichtechtheit (Vergrauungsstabilität), Farbechtheit, Nassfestigkeit, Imprägnierbarkeit und Bedruckbarkeit.

Um die erforderliche Opazität des Dekorpapiers zu erzielen, ist ein Pigment auf Basis Titandioxid prinzipiell hervorragend geeignet. Bei der Papierherstellung wird in der Regel ein Titandioxid-Pigment bzw. eine Titandioxid-Pigment-Suspension mit einer Zellstoff-Suspension vermengt. Neben den Einsatzstoffen Pigment und Zellstoff kommen im Allgemeinen auch Hilfsstoffe wie z. B. Nassfestmittel und gegebenenfalls weitere Zusatzstoffe wie z. B. bestimmte Füllstoffe zum Einsatz. Die Wechselwirkungen der einzelnen Komponenten (Zellstoff, Pigment, Hilfs- und Zusatzstoffe, Wasser) untereinander tragen zur Papierbildung bei und bestimmen die Retention des Pigments. Unter Retention versteht man das Rückhaltevermögen aller anorganischen Stoffe im Papier bei der Herstellung.

Für die Anwendung im Dekorpapier existiert eine Reihe von Titandioxid-Pigmenten. Zu den wichtigsten Eigenschaften gehört neben einer guten Helligkeit und Opazität die Lichtechtheit. Bekanntermaßen ist Titandioxid photochemisch aktiv. Ein mit Titandioxid pigmentiertes Dekorpapier weist unter Einwirkung von UV-Strahlung in Gegenwart von Feuchte und Sauerstoff eine zunehmende Vergrauung auf. Unter Lichtechtheit versteht man vor allem die Beständigkeit der Laminate gegen Vergrauung unter Einwirkung von UV-Strahlung.

Zur Verbesserung der Lichtechtheit (Vergrauungsstabilität) von Dekorpapier wird das Titandioxidpigment üblicherweise mit Aluminiumverbindungen insbesondere mit Aluminiumphosphat beschichtet.

Beispielsweise offenbart die US 5,114,486 die Beschichtung mit Zink-/Aluminiumphosphat, um die Vergrauungsstabilität zu verbessern.

US 5,785,748 beschreibt ein Verfahren zur gleichmäßigen Beschichtung von Titandioxid mit Aluminiumphosphat, bei welchem eine Mischung aus konzentrierter Phosphorsäure und einer Aluminiumverbindung zu einer Titandioxidsuspension gegeben wird und Aluminiumphosphat bei einem pH-Wert von 3,5 oder mehr gefällt wird.

WO 2004/061013 A2 offenbart ein Titandioxidpigment mit guter Vergrauungsstabilität für den Einsatz in Dekorpapier, das mit einer Aluminiumphosphatbeschichtung versehen ist und das besonders günstige Oberflächeneigenschaften in Bezug auf isoelektrischen Punkt und Zetapotential aufweist. Die Aluminiumphosphatschicht wird bei einem konstant gehaltenen pH-Wert von 7 aufgefällt.

In einer weiter entwickelten Form dieses Verfahrens gemäß DE 10 2006 045 244 A1 wird das beschichtete Pigment abschließend einer Wärmebehandlung unterzogen.

Gemäß DE 103 32 650 A1 kann ein Titandioxidpigment hoher Vergrauungsstabilität und gleichzeitig verbesserter Retention und Opazität hergestellt werden. Das Verfahren zeichnet sich dadurch aus, dass eine Aluminium- und eine Phosphorkomponente bei einem konstant gehaltenen pH-Wert von wenigstens 10 in eine Titandioxidsuspension gegeben werden und anschließend der pH-Wert auf unter 9 abgesenkt wird, um Aluminiumphosphat auszufällen.

Aufgabenstellung und Kurzbeschreibung der Erfindung

Aufgabe der Erfindung ist es, ein Verfahren anzugeben, mit dem Titandioxidpigmente mit gegenüber dem Stand der Technik verbesserter Vergrauungsstabilität bei gleichbleibend hoher Helligkeit und Opazität für den Einsatz in Dekorpapieren hergestellt werden können.

Die Aufgabe wird durch ein Verfahren zur Herstellung eines nachbehandelten Titandioxid-Pigments gelöst, das folgende Schritte umfasst:

a) Bereitstellen einer wässrigen Suspension unbehandelter Titandioxid-Partikel mit einem pH-Wert von mindestens 8, bevorzugt mindestens 9,

b) Zugabe von Phosphorsäure,
c) Zugabe einer alkalischen Aluminiumverbindung,
d) Zugabe einer sauren Aluminiumverbindung

Weitere vorteilhafte Verfahrensvarianten sind in den Unteransprüchen beschrieben.

Gegenstand der Erfindung ist also ein Nachbehandlungsverfahren für Titandioxid-Pigmente, das zu Pigmenten mit verbesserter Vergrauungsstabilität bei gleichbleibend hoher Helligkeit und Opazität führt.

Beschreibung der Erfindung

Hier und im Folgenden sollen unter "Oxid" auch die entsprechenden wasserhaltigen Oxide bzw. die Hydrate verstanden werden. Alle im Folgenden offenbarten Angaben bezüglich pH-Wert, Temperatur, Konzentration in Gew.-% oder Vol.% usw. sind so zu verstehen, dass alle Werte, die im Bereich der dem Fachmann bekannten jeweiligen Messgenauigkeit liegen, mitumfasst sind. Die Angabe "signifikante Menge" oder "signifikanter Anteil" im Rahmen des vorliegenden Patents kennzeichnet die Mindestmenge einer Komponente, ab der die Eigenschaften der Mischung im Rahmen der Messgenauigkeit beeinflusst werden.

Die Erfindung geht von unbehandelten Titandioxid-Partikeln (Titandioxid-Grundkörper) aus, die nach dem Chloridverfahren oder nach dem Sulfatverfahren hergestellt wurden. Die Titandioxid-Partikel sind bevorzugt Aluminium-dotiert. Besonders geeignet sind nach dem Chloridverfahren hergestellte Aluminium-dotierte Titandioxid-Partikel. Die Höhe der Aluminiumdotierung liegt vorzugsweise bei 0,5 bis 2,0 Gew.-% gerechnet als $Al_2O_3$.

Bei dem erfindungsgemäßen Verfahren wird auf der Titandioxid-Partikeloberfläche eine Schicht aus Aluminium-Phosphor-Verbindungen gegebenenfalls im Gemenge mit Aluminiumoxidhydrat abgeschieden. Die Zusammensetzung ist abhängig von den eingesetzten Mengen der Aluminium- und der Phosphorkomponente und der gegebenenfalls vorhandenen Menge an dotiertem $Al_2O_3$. Im Folgenden wird diese Schicht vereinfacht als Aluminiumoxidphosphat-Schicht bezeichnet.

Das erfindungsgemäße Verfahren geht von einer wässrigen Suspension unbehandelter Titandioxidpartikel aus, wobei der pH-Wert auf mindestens 8, bevorzugt auf mindestens 9 eingestellt ist (Schritt a). In einer Ausführung des Verfahrens ist die Suspension zuvor einer Nassvermahlung in einer Rührwerksmühle unterzogen worden, wobei die in der betrieblichen Praxis bekannten Mahlkörper wie Sand oder Zirkonoxid verwendet werden können. Das erfindungsgemäße Verfahren wird bei einer Temperatur von unter 80 °C, bevorzugt bei 45 bis 65 °C, insbesondere bei 55 bis 65 °C durchgeführt.

Nachfolgend wird in einem Schritt b) Phosphorsäure ($H_3PO_4$) zugegeben, wobei sich der pH-Wert bevorzugt auf 3 oder weniger absenkt, insbesondere auf etwa 2 oder darunter. Die Phosphorsäure weist bevorzugt eine Konzentration von etwa 75% auf.

Optional kann vor oder während der Phosphorsäure-Zugabe eine alkalische oder eine saure Aluminiumkomponente in die Suspension gegeben werden, beispielsweise Natriumaluminat bzw. Aluminiumsulfat, wobei der pH-Wert am Ende von Schritt b) bevorzugt bei 3 oder darunter, insbesondere bei etwa 2 oder darunter liegt.

Es hat sich herausgestellt, dass am Ende von Schritt b) von unbehandelten Aluminiumdotierten Titandioxid-Partikeln ein Teil des Aluminiums gelöst wurde. Beispielsweise ist bei einem $Al_2O_3$-Gehalt des Grundkörpers von 1,4 Gew.-% am Ende von Schritt b) (bei einem pH-Wert von etwa 2) eine Menge von etwa 0,2 Gew.-% Aluminium gerechnet als $Al_2O_3$ gelöst:

In einem Schritt c) wird anschließend eine alkalische Aluminiumkomponente in die Suspension gegeben, bevorzugt Natriumaluminat. Der pH-Wert am Ende von Schritt c) beträgt bevorzugt mindestens 5, insbesondere mindestens 7.

Anschließend wird in einem Schritt d) eine saure Aluminiumkomponente zugegeben, wobei sich ein pH-Wert im Bereich von 4,5 bis 7, bevorzugt im Bereich von 5 bis 6 einstellt.

In einer besonderen Ausführung des Verfahrens wird in einem Schritt e) eine weitere Aluminiumoxidschicht auf die Titandioxidpartikel aufgebracht, beispielsweise durch parallele Zugabe von Natriumaluminat und Aluminiumsulfat bei einem festem pH-Wert von etwa 5 (sogenanntes "fixed pH"-Verfahren).

Nach Bedarf erfolgt abschließend in einem Schritt f) eine pH-Wert-Einstellung auf etwa 6 bis 7.

Die in Schritt b) eingesetzte Menge Phosphorsäure beträgt bevorzugt 1,0 bis 5,0 Gew.-%, insbesondere 1,5 bis 3,5 Gew.-% und insbesondere bevorzugt 2,0 bis 3,0 Gew.-% gerechnet als $P_2O_5$ und bezogen auf $TiO_2$.

Die Gesamtmenge der in Schritt c) und d) zugegebenen Aluminiumverbindungen beträgt bevorzugt 2,5 bis 4,0 Gew.-% gerechnet als $Al_2O_3$ und bezogen auf $TiO_2$. Auf diese Menge ist auch die optional vor oder während Schritt b) zugegebene alkalische oder saure Aluminiumverbindung anzurechnen.

Die Gesamtmenge der in Schritt b) bis Schritt e) zugegebenen Aluminiumverbindungen beträgt bevorzugt 3,0 bis 7,0 Gew.-%, insbesondere 4,0 bis 6,0 Gew.-% gerechnet als $Al_2O_3$ und bezogen auf $TiO_2$.

Das nachbehandelte TiO$_2$-Pigment wird durch dem Fachmann bekannte Methoden der Filtration von der Suspension abgetrennt und der entstandene Filterkuchen gewaschen, um die löslichen Salze zu entfernen. Das erfindungsgemäße Verfahren zeichnet sich dadurch aus, dass die Restfeuchte des Filterkuchens um etwa 10% gesenkt werden kann. Beispielsweise weist der Filterkuchen bei den bekannten Nachbehandlungsverfahren (z.B. DE 103 32 650 A1) eine Restfeuchte von mindestens 58 Gew.-% auf (Moore-Filtration), während mit dem erfindungsgemäßen Verfahren sich bevorzugt Restfeuchten von 52 Gew.-% und weniger erreichen lassen. Hierdurch ergibt sich ein signifikanter wirtschaftlicher Vorteil, da in dem nachfolgenden Trocknungsschritt weniger Wasser verdampft werden muss.

Dem gewaschenen Filterkuchen kann zur Verbesserung der Lichtechtheit des Pigments im Laminat vor oder während der anschließenden Trocknung eine nitrathaltige Verbindung, z.B. KNO$_3$, NaNO$_3$, Al(NO$_3$)$_3$ in einer Menge von 0,05 bis 0,5 Gew.-% gerechnet als NO$_3$ und bezogen auf Pigment zugemengt werden. Weiterhin kann dem Pigment in einer der Prozessstufen zur Verbesserung der Fließeigenschaften eine organische Verbindung zugefügt werden aus der Reihe derer, wie sie bei der Herstellung von TiO$_2$-Pigmenten üblicherweise verwendet werden und die dem Fachmann bekannt sind wie z.B. Polyalkohole (Trimethylolethan, Trimethylolpropan, Neopentylglykol). Alternativ zur Zugabe der nitrathaltigen Verbindungen vor oder während der Trocknung kann die Zugabe solcher Substanzen auch während der Mahlung erfolgen.

In einer alternativen Ausführung des Verfahrens wird das behandelte Pigment einer Wärmebehandlung bei 200 bis 400 °C, bevorzugt 200 bis 300 °C für etwa 60 bis 180 Minuten unterzogen.

Das erfindungsgemäß hergestellte Pigment zeichnet sich bevorzugt durch einen Aluminiumgehalt von 3,0 bis 7,0 Gew.-% gerechnet als Al$_2$O$_3$ und einen Phosphatgehalt von 1,0 bis 5,0 Gew.-% gerechnet als P$_2$O$_5$ aus. Das nach dem erfindungsgemäßen Verfahren hergestellte Pigment zeigt gegenüber den Vergleichspigmenten eine verbesserte Vergrauungsstabilität bei gleich guter Helligkeit und Opazität und ist für den Einsatz in Dekorpapier bestens geeignet. Darüber hinaus weist der Pigment-Filterkuchen im Vergleich zu DE 103 32 650 A1 geringere Restfeuchten auf, wodurch sich weitere wirtschaftliche Vorteile ergeben.

Beispiele

Im Folgenden ist die Erfindung beispielhaft beschrieben, ohne dass damit eine Einschränkung der Erfindung verbunden ist.

Beispiel 1

Einer nassvermahlenen TiO$_2$-Suspension aus dem Chloridprozess mit einer TiO$_2$-Konzentration von 450 g/l, einer Aluminiumdotierung entsprechend 1,5 Gew.-% Al$_2$O$_3$ und mit einem pH-Wert von 10 wurde 2,5 Gew.-% P$_2$O$_5$ in Form von 75%iger H$_3$PO$_4$ zugefügt. Dabei stellte sich ein pH-Wert von etwa 2 ein. Anschließend wurde 2,0 Gew.-% Al$_2$O$_3$ als Natriumaluminat zugefügt. Dabei stellte sich ein pH-Wert von etwa 10 ein. Danach wurde die Suspension im nächsten Schritt durch Zugabe von Aluminiumsulfat (entsprechend 1,1 bis 1,2 Gew.-% Al$_2$O$_3$) auf einen pH-Wert von 5 eingestellt. Es wurde anschließend 2,2 Gew.-% Al$_2$O$_3$ in Form einer parallelen Zugabe von Aluminiumsulfat- und Natriumaluminat-Lösung zugemischt, so dass der pH-Wert bei 5 gehalten wurde (fixed-pH Methode). Anschließend wurde die Suspension mit Hilfe einer alkalischen Natriumaluminat-Lösung auf einen pH-Wert von 5,5 bis 7 eingestellt. Die nachbehandelte TiO$_2$-Suspension wurde filtriert und durch Waschen von den wasserlöslichen Salzen befreit. Die gewaschene Filterpaste wurde nach Zugabe von etwa 0,18 Gew.-% NO$_3$ als NaNO$_3$ in einem Sprühtrockner getrocknet und anschließend auf einer Strahlmühle vermahlen. Das hergestellte Pigment enthielt folgende Nachbehandlungselemente ausgedrückt in Form ihrer Oxide: 2,2 Gew.-% P$_2$O$_5$ und 5,8 Gew.-% Al$_2$O$_3$ jeweils bezogen auf den TiO$_2$-Grundkörper und 0,18 Gew.-% NO$_3$.

Beispiel 2

Es wurde wie in Beispiel 1 verfahren mit dem Unterschied, dass bei dem Schritt "fixed pH-Methode" anstelle von 2,2 Gew.-% Al$_2$O$_3$ 1,0 Gew.-% Al$_2$O$_3$ in Form der parallelen Zugabe von Aluminiumsulfat- und Natriumaluminat-Lösung zugemischt wurde.

Das hergestellte Pigment enthielt folgende Nachbehandlungselemente ausgedrückt in Form ihrer Oxide: 2,3 Gew.-% P$_2$O$_5$ und 4,9 Gew.-% Al$_2$O$_3$ jeweils bezogen auf den TiO$_2$-Grundkörper und 0,18 Gew.-% NO$_3$.

Vergleichsbeispiel

Einer nassvermahlenen TiO$_2$-Suspension aus dem Chloridprozess mit einer TiO$_2$-Konzentration von 450 g/l, einer Aluminiumdotierung entsprechend 1,5 Gew.-% $Al_2O_3$ und mit einem pH-Wert von 10 wurde 2,0 Gew.-% $Al_2O_3$ als Natriumaluminat zugefügt. Dabei stellte sich ein pH-Wert von >12 ein. Danach wurde 2,5 Gew.-% $P_2O_5$ als Dinatrium-Hydrogenphosphat-Lösung zugefügt. Der pH-Wert der Suspension blieb bei >12. Die Suspension wurde im nächsten Schritt durch Zugabe von Aluminiumsulfat (entsprechend 2,4 Gew.-% $Al_2O_3$) auf einen pH-Wert von 5 eingestellt. Anschließend wurde 0,9 Gew.-% $Al_2O_3$ in Form einer parallelen Zugabe von Aluminiumsulfat- und Natriumaluminat-Lösung zugemischt, so dass der pH-Wert bei 5 gehalten wurde. Anschließend wurde die Suspension mit Hilfe einer alkalischen Natriumaluminat-Lösung auf einen pH-Wert von 6,8 eingestellt. Die nachbehandelte $TiO_2$-Suspension wurde filtriert und durch Waschen von den wasserlöslichen Salzen befreit. Die gewaschene Filterpaste wurde nach Zugabe von etwa 0,18% $NO_3$ als $NaNO_3$ in einem Sprühtrockner getrocknet und anschließend auf einer Strahlmühle vermahlen.

Das hergestellte Pigment enthielt folgende Nachbehandlungselemente ausgedrückt in Form ihrer Oxide: 2,1 Gew.-% $P_2O_5$ und 6,0 Gew.-% $Al_2O_3$ jeweils bezogen auf den $TiO_2$-Grundkörper und 0,18 Gew.-% $NO_3$.

Testmethoden und Testergebnisse

Laminatherstellung (Labormaßstab)

Die gemäß Beispiel 1 und 2 und Vergleichsbeispiel hergestellten Titandioxid-Pigmente wurden in Dekorpapier eingearbeitet und anschließend hinsichtlich ihrer optischen Eigenschaften und Lichtechtheit in verpressten Laminaten untersucht. Dazu wurde das zu prüfende Titandioxid-Pigment in Zellstoff eingearbeitet und Blätter mit einen Flächenmasse von etwa 80 $g/m^2$ und einem $TiO_2$-Massenanteil von etwa 30 $g/m^2$ hergestellt.

Für die Beurteilung der optischen Eigenschaften der Dekorpapiere und damit der Qualität des Titandioxidpigments ist es von Bedeutung, dass Dekorpapiere gleichen Aschegehalts verglichen werden. Hierfür ist es notwendig, dass die für die Blattbildung eingesetzte Menge Titandioxidpigment entsprechend der Retention an den gewünschten $TiO_2$-Massenanteil im Papier, hier 30 $g/m^2 \pm 1$, bzw. das gewünschte Flächengewicht, hier 80 $g/m^2 \pm 1$, angepasst wird. Für die Bildung eines Blatts wurden in diesen Versuchen 1,65 g Zellstoff (ofentrocken) zugrunde gelegt. Die Vorgehensweise und die eingesetzten Hilfsstoffe sind dem Fachmann bekannt.

Der Titandioxid-Gehalt (Asche in [%]) eines Blatts wurde anschließend bestimmt. Zur Bestimmung des Titandioxid-Gehalts wurde eine definierte Gewichtsmenge des hergestellten Papiers mit einem Schnellverascher bei 900 °C verascht. Über die Auswaage des Rückstands ist der Massenanteil an $TiO_2$ (Asche in [%]) zu berechnen. Zur Berechnung des Aschegehalts wurde folgende Formel zugrunde gelegt:

$$\text{Aschegehalt } [g/m^2] = (\text{Asche } [\%] \times \text{Flächengewicht } [g/m^2]) / 100 \, [\%].$$

Die weitere Verarbeitung des Papiers umfasste die Imprägnierung und Verpressung zu Laminaten. Das zu beharzende Blatt wurde in eine Melaminharzlösung vollständig eingetaucht, danach zwischen 2 Rakel gezogen, um einen bestimmten Harzauftrag zu gewährleisten, und anschließend im Umlufttrockenschrank bei 130°C vorkondensiert. Der Harzauftrag betrug 110 bis 140 % des Blattgewichts. Das Blatt hatte eine Restfeuchte von 5,7 bis 6,2 Gew.-%. Die kondensierten Blätter wurden mit Phenolharz getränkten Kernpapieren und weißem bzw. schwarzem Underlay-Papier zu Presspaketen zusammengelegt.

Für die Messung der optischen Eigenschaften wurden die Presspakete folgendermaßen aufgebaut: Dekorpapier, weißes bzw. schwarzes Underlay-Papier, 6 Blätter Kernpapier, weißes bzw. schwarzes Underlay-Papier, Dekorpapier.

Für die Bestimmung der Vergrauungsstabilität wurden die Presspakete folgendermaßen aufgebaut: Dekorpapier, 5 Blätter Kernpapier, weißes Underlay-Papier.

Das Pressen der Pakete erfolgt mit Hilfe einer Wickert Laminat-Presse Typ 2742 bei einer Temperatur von 140 °C und einem Druck von 90 bar für eine Presszeit von 300 Sekunden.

Testung

Die Messung der optischen Eigenschaften und der Vergrauungsstabilität der Laminate erfolgte mit handelsüblichen Geräten (Spektralphotometer, Xenotestgerät).

Zur Beurteilung der optischen Eigenschaften von Schichtpress-Stoffen werden die Farbwerte (CIELAB L*, -a*, -b*) nach DIN 6174 mit Hilfe des ELREPHO® 3300-Farbmessgeräts über weißem bzw. über schwarzem Underlay-Papier bestimmt.

Als Maß für die Helligkeit wurde der CIELAB Farbwert L* über weißem Underlay-Papier ($L^*_{weiß}$) verwendet.

Die Opazität ist ein Maß für die Lichtdurchlässigkeit oder Transmission des Papiers. Als Maß für die Opazität der Laminate wurden folgende Größen gewählt: CIELAB $L^*_{schwarz}$, die Helligkeit der Laminate gemessen über schwarzem Underlay-Papier und der Opazitätswert L [%] = $Y_{schwarz}/Y_{weiß}$ x 100, ermittelt aus dem Y-Wert gemessen über schwarzem Unterlay-Papier ($Y_{schwarz}$) und dem Y-Wert über weißem Underlay-Papier ($Y_{weiß}$). Beide Werte, CIELAB $L^*_{schwarz}$ und L [%], werden auf einen Aschegehalt von 30,0 $g/m^2$ normiert. Zur Beurteilung der Vergrauungsstabilität (Lichtechtheit) der Titandioxid-Pigmente bzw. der Titandioxid-Pigmentmischungen werden die entsprechenden Laminatmuster in einem XENOTEST® Alpha belichtet. Es wurden die Farbwerte CIELAB L*, a* und b* nach DIN 6174 vor und nach einer Dauer von 96 Stunden Belichtung im XENOTEST® Alpha gemessen. Die Lichtquelle ist eine Xenon-Bogen-Lampe mit einer Strahlungsintensität von 70 $W/m^2$. Die Temperatur im Probenraum des Gerätes liegt bei 45 °C, die relative Feuchte bei 30 %. Die Proben werden im "Wendelauf" belichtet. Als Maß für die Vergrauungsstabilität wurden sowohl $\Delta L^* = L^*_{vorher} - L^*_{nacher}$ als auch $\Delta E = ((\Delta L^*)^2 + (\Delta a^*)^2 + (\Delta b^*)^2)^{1/2}$ angegeben

Testergebnisse

Die Tabelle zeigt die Testergebnisse für Laminate, die mit den erfindungsgemäßen Pigmenten (Beispiel 1 und 2) und mit einem Vergleichspigment (Vergleichsbeispiel) hergestellt wurden. Es zeigt sich, dass die mit den erfindungsgemäßen Pigmenten hergestellten Laminate eine deutlich höhere Vergrauungsstabilität bei gleichen Helligkeits- und Opazitätswerten aufweisen im Vergleich zu einem Laminat, das ein nach dem Stand der Technik hergestelltes Pigment enthält.

Tabelle

| | Vergrauungsstabilität | | Aschegehalt | Opazität | | CIELAB Farbwert |
| | $\Delta L^*$ | $\Delta E$ | $[g/m^2]$ | $L^*_{schwarz}$ | [%] | $L^*_{weiß}$ |
|---|---|---|---|---|---|---|
| Beispiel 1 | -0,72 | 0,73 | 30,4 | 90,3 | 90,5 | 93,6 |
| Beispiel 2 | -0,64 | 0,65 | 30,1 | 90,4 | 90,8 | 93,6 |
| Vergleichsbeispiel | -0,92 | 0,94 | 30,6 | 90,4 | 90,7 | 93,6 |

**Patentansprüche**

1. Verfahren zur Herstellung eines nachbehandelten Titandioxid-Pigments **gekennzeichnet durch** folgende Schritte:

   a) Bereitstellen einer wässrigen Suspension unbehandelter Titandioxid-Partikel mit einem pH-Wert von mindestens 9,
   b) Zugabe von Phosphorsäure, wobei sich ein pH-Wert von 3 und weniger einstellt,
   c) Zugabe einer alkalischen Aluminiumverbindung,
   d) Zugabe einer sauren Aluminiumverbindung.

2. Verfahren nach Anspruch 1 **dadurch gekennzeichnet, dass** sich am Ende von Schritt b) ein pH-Wert von 2 oder weniger einstellt.

3. Verfahren nach Anspruch 1 oder 2 **dadurch gekennzeichnet, dass** sich am Ende von Schritt c) ein pH-Wert von wenigstens 5, bevorzugt wenigstens 7 einstellt.

4. Verfahren nach einem oder mehreren der Ansprüche 1 bis 3 **dadurch gekennzeichnet, dass** sich am Ende von Schritt d) ein pH-Wert von 4,5 bis 7, bevorzugt 5 bis 6 einstellt.

5. Verfahren nach einem oder mehreren der Ansprüche 1 bis 4 **dadurch gekennzeichnet, dass** vor oder während Schritt b) eine alkalische oder ein saure Aluminiumverbindung zugegeben wird und sich am Ende von Schritt b) ein pH-Wert von 3 oder weniger, bevorzugt von 2 und weniger einstellt.

6. Verfahren nach einem oder mehreren der Ansprüche 1 bis 5 **dadurch gekennzeichnet, dass** in einem Schritt e) eine Aluminiumoxid-Schicht aufgebracht wird.

7. Verfahren nach Anspruch 6 **dadurch gekennzeichnet, dass** die Aluminiumoxid-Schicht durch parallele Zugabe von Natriumaluminat und Aluminiumsulfat bei einem festem pH-Wert von etwa 5 aufgebracht wird.

8. Verfahren nach einem oder mehreren der Ansprüche 1 bis 7 **dadurch gekennzeichnet, dass**

   die Summe der in Schritt b) bis Schritt e) zugegebenen Aluminiumverbindungen gerechnet als $Al_2O_3$ 3,0 bis 7,0 Gew.-% vorzugsweise 3,0 bis 6,0 Gew.-% beträgt.

9. Verfahren nach einem oder mehreren der Ansprüche 1 bis 8 **dadurch gekennzeichnet, dass**

   die Menge der zugegebenen Phosphorsäure gerechnet als $P_2O_5$ 1,0 bis 5,0 Gew.-% vorzugsweise 1,5 bis 3,5 Gew.-%, insbesondere 2,0 bis 3,0 Gew.-% beträgt.

10. Verfahren nach einem oder mehreren der Ansprüche 1 bis 9 **dadurch gekennzeichnet, dass**

    das Pigment zur Verbesserung der Lichtechtheit im Laminat mit Nitrat behandelt wird, so dass das fertige Pigment bis zu 0,5 Gew.-% $NO_3$ enthält.

**Claims**

1. Method for producing a post-treated titanium dioxide pigment, **characterised by** the following steps:

   a) Providing an aqueous suspension of untreated titanium dioxide particles with a pH value of at least 9,
   b) Adding phosphoric acid, wherein after step b) said suspension has a value of 3 or less.
   c) Adding an alkaline aluminum compound, and
   d) Adding an acid aluminum compound.

2. Method according to claim 1, **characterised in that**
   a pH value of 2 or less is obtained at the end of step b).

3. Method according to claim 1 or 2, **characterised in that**
   a pH value of at least 5, preferably of at least 7, is obtained at the end of step c).

4. Method according to one or more of claims 1 to 3, **characterised in that**
   a pH value of 4.5 to 7, preferably of 5 to 6, is obtained at the end of step d).

5. Method according to one or more of claims 1 to 4, **characterised in that**
   an alkaline or acid aluminum compound is added before or during step b) and a pH value of 3 or less, preferably of 2 or less, is obtained at the end of step b).

6. Method according to one or more of claims 1 to 5, **characterised in that**
   an aluminum oxide layer is applied in a step e).

7. Method according to claim 6, **characterised in that**
   the aluminum oxide layer is applied by parallel adding sodium aluminate and aluminum sulphate at a fixed pH value of about 5.

8. Method according to one or more of claims 1 to 7, **characterised in that**
   the sum of the aluminum compounds added in step b) to step e), calculated as $Al_2O_3$, is 3.0 to 7.0 wt.%, preferably 3.0 to 6.0 wt.%.

9. Method according to one or more of claims 1 to 8, **characterised in that**
   the quantity of added phosphoric acid, calculated as $P_2O_5$, is 1.0 to 5.0 wt.%, preferably 1.5 to 3.5 wt.%, and more preferably 2.0 to 3.0 wt.%.

10. Method according to one or more of claims 1 to 9, **characterised in that**,
    to improve light-fastness in the laminate, the pigment is treated with nitrate, such that the finished pigment contains up to 0.5 wt.% $NO_3$.

**Revendications**

1. Procédé de fabrication d'un pigment de dioxyde de titane traité ultérieurement **caractérisé par** les étapes suivantes

   a) mise à disposition d'une suspension aqueuse de particules de dioxyde de titane non traitées avec un pH d'au moins 9,
   b) ajout d'acide de phosphore, dans lequel un pH de 3 et inférieur s'établit.
   c) ajout d'un composé d'aluminium alcalin,
   d) ajout d'un composé d'aluminium acide.

2. Procédé selon la revendication 1 **caractérisé en ce que**
   à la fin de l'étape b), un pH de 2 ou inférieur s'établit.

3. Procédé selon la revendication 1 ou 2 **caractérisé en ce que**
   à la fin de l'étape c), un pH d'au moins 5, de préférence d'au moins 7 s'établit.

4. Procédé selon une ou plusieurs des revendications 1 à 3 2 **caractérisé en ce que**
   à la fin de l'étape d), un pH de 4,5 à 7 de préférence de 5 à 6 s'établit.

5. Procédé selon une ou plusieurs des revendications 1 à 4 **caractérisé en ce que**
   avant ou pendant l'étape b), un composé d'aluminium alcalin ou acide est ajouté et à la fin de l'étape b), un pH de 3 ou inférieur, de préférence de 2 et inférieur s'établit.

6. Procédé selon une ou plusieurs des revendications 1 à 5 2 **caractérisé en ce que**
   dans l'étape e), une couche d'oxyde d'aluminium est appliquée.

7. Procédé selon la revendication 6 **caractérisé en ce que**
   la couche d'oxyde d'aluminium est appliquée par ajout parallèle d'aluminate de sodium et de sulfate d'aluminium pour un pH fixe d'environ 5.

8. Procédé selon une ou plusieurs des revendications 1 à 7 **caractérisé en ce que**
   la somme des composés d'aluminium ajoutés de l'étape b) à l'étape e) calculée en $Al_2O_3$ s'élève de 3,0 à 7,0 % en poids de préférence de 3,0 à 6,0 % en poids.

9. Procédé selon une ou plusieurs des revendications 1 à 8 **caractérisé en ce que**
   la quantité d'acide de phosphore ajoutée calculée en $P_2O_5$ est de 1,0 à 5,0 % en poids de préférence de 1,5 à 3,5 % en poids, en particulier de 2,0 à 3,0 % en poids.

10. Procédé selon une ou plusieurs des revendications 1 à 9 **caractérisé en ce que**
    le pigment est traité au nitrate pour améliorer la tenue à la lumière dans le stratifié, si bien que le pigment terminé contient jusqu'à 0,5 % en poids de $NO_3$.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5114486 A
- US 5785748 A
- WO 2004061013 A2
- DE 102006045244 A1
- DE 10332650 A1